# EUROPEAN PATENT SPECIFICATION

(11) **EP 3 715 800 B1**
(45) Date of publication and mention of the grant of the patent: **30.11.2022**
(21) Application number: 20165116.3
(22) Date of filing: 24.03.2020
(51) Int. Cl.: G01F 23/24, D06F 39/08, A47L 15/42

(54) **DETECTION SENSOR FOR DETECTING THE LEVEL OF A LIQUID IN A STORAGE CONTAINER OR TANK, IN PARTICULAR FOR HOUSEHOLD APPLIANCES SUCH AS WASHING MACHINES, LAUNDRY MACHINES, DISHWASHERS OR THE LIKE**
DETEKTIONSSENSOR ZUM ERFASSEN DES NIVEAUS EINER FLÜSSIGKEIT IN EINEM VORRATSBEHÄLTER ODER TANK, INSBESONDERE FÜR HAUSHALTSGERÄTE WIE WASCHMASCHINEN, WASCHAUTOMATEN, GESCHIRRSPÜLER ODER DERGLEICHEN
CAPTEUR DE DÉTECTION POUR DÉTECTER LE NIVEAU D'UN LIQUIDE DANS UN RÉCIPIENT OU UN RÉSERVOIR DE STOCKAGE, EN PARTICULIER POUR DES APPAREILS MÉNAGERS TELS QUE DES MACHINES À LAVER, DES MACHINES À LAVER LE LINGE, DES LAVE-VAISSELLES OU SIMILAIRES

(30) Priority: 26.03.2019 IT 201900004339
(43) Date of publication of application: 30.09.2020
(73) Proprietor: Elettrotecnica Rold S.R.L., 20014 Nerviano (IT)
(72) Inventor: ROCCHITELLI, Stefano, 20010 Pogliano Milanese (IT); SANCANDI, Alberto, 20153 Milano (IT); PROCOPIO, Francesco, 20018 Sedriano (IT)
(74) Representative: Lualdi, Lorenzo

(56) References cited:
- EP-A1- 0 382 491
- EP-A2- 0 962 751
- US-A- 3 809 116
- US-A- 4 380 243
- US-A1- 2005 022 595
- US-A1- 2011 309 087

## Description

### TECHNICAL FIELD OF THE INVENTION

The present invention belongs to the field of household appliances such as washing machines, dishwashers and/or similar household appliances. In particular, the present invention relates to a sensor for detecting the level of a liquid in at least one storage container or tank of a household appliance of the aforesaid type.

In detail, the present invention relates to an innovative sensor for the continuous, accurate and reliable detection of the level of a liquid in at least one storage container or tank of a household appliance of the aforesaid type. The present invention further relates to a household appliance (for example a washing machine or similar household appliance) equipped with a sensor of the aforesaid type for detecting the level of a liquid in at least one storage container or tank of said household appliance.

### BACKGROUND ART

In the field of household appliances, in particular household appliances the operation of which involves the use of water or liquids in general such as washing machines and/or laundry machines and/or similar household appliances, the use of anti-flooding systems adapted to prevent the flooding of the environments in which the household appliances are installed is known.

According to the most common embodiments, the anti-flooding systems according to the prior art provide that, in case of leaks in the hydraulic system, the liquids exiting through the leak are conveyed at least in part into a collection container or tank equipped with a level sensor, wherein said level sensor, detecting the achievement of a threshold level of the liquid in the container, activates the blocking of the household appliance and/or the emptying of said container.

Again according to the most commonly used embodiments, the level sensors of known type essentially comprise a float which, pushed upwards by the liquid lost by the appliance and therefore raising in the container or tank, mechanically presses a button or switch thus closing a circuit. The circuit board connected to the circuit then activates the alarm and any procedure for blocking and/or emptying the household appliance.

The level sensors according to the prior art, although appreciable from different points of view (for example the simplicity of construction and installation and/or the overall low costs which are therefore also compatible with those of non-high-end appliances), nevertheless have several drawbacks that the applicant intends to overcome or at least minimize through the present invention.

A first drawback is undoubtedly the limited reliability resulting from the risk of accidental blockage (for multiple reasons) of the float, the loss of mobility of which inevitably results in the inability to detect a significant increase in the liquid in the container or tank.

A second drawback relates to the inevitable inertia resulting from the decreased mobility of the float (which is inevitable over time), wherein the aforementioned inertia inevitably results in a delayed activation of the blocking system and/or the emptying procedure, which is a particularly serious drawback in case of substantial loss of liquids.

Finally, a further drawback is due to the limited precision deriving from the variability of the thrusts imparted by the liquid to the float, the variability of the thrusts being in turn attributable to the motion and/or turbulence of the liquid inside the collection container or tank; for example, in case of turbulent inflow of liquid into the container or tank, the float can be pushed upwards beyond the position which is attributable to the actual amount of liquid in the container, and thus eventually up to closing the circuit (thus inappropriately activating the blockage of the household appliance and/or the emptying procedure).

Therefore, it is the main object of the present invention to overcome or at least minimize the problems summarized above and observed in the liquid level detection devices and/or sensors according to the prior art.

In particular, it is a first object of the present invention to provide a level sensor which is not constrained by mechanical movements which, as anticipated, are susceptible of blocks, inertias and inaccurate movements.

Furthermore, the present invention seeks to create a low-cost level sensor with reduced dimensions and footprint, as well as characterized by constructional simplicity and high modularity.

According to the present invention, the sensor should also be constructible according to simple manufacturing methods and therefore at low cost, and should be adapted to ensure the above objects for an extended period of time, in particular without diminishing the reliability and/or precision thereof.

Moreover, it is a further object of the present invention to suggest a sensor adapted to be installed in a plurality of household appliances of a known type in an equally simple and affordable manner, as well as without requiring substantial modifications of said household appliances.

Examples of detection sensors for detecting the level of a liquid are known from US 3809116, US 4380243, EP 0962751, US 2005/022595, EP 0382491 and US 2011/309087.

### SUMMARY OF THE PRESENT INVENTION

The present invention is based on the general consideration that it is possible to achieve the above stated purposes by means of a "merely electrical" sensor (see the description below) and therefore not based on movements of moving parts, but rather on the detection of electrical signals.

In particular, the present invention derives from the consideration that it is possible to suitably utilize the electrical qualities of water (possibly with added solvents, detergents and the like), in particular the electrical conductivity thereof which, however high, is nevertheless finite.

In particular, a further consideration underlying the present invention is that between two electrodes immersed (at least partially) in water or liquid in general, and placed at different electrical potentials, a variable series resistance is inevitably inserted depending on the degree of immersion.

Moreover, a further consideration underlying the present invention is that the above-mentioned resistance can be "modulated" at the design stage (and typically on a merely geometrical basis), depending on the specifications of the circuit board (i.e., increased or decreased at will so as to be equivalent to the ideal contact obtained with a switch).

On the basis of the above considerations, as well as with the aim of overcoming or at least minimizing the problems and/or drawbacks observed in the liquid level sensors according to the prior art, according to a first embodiment the present invention relates to a detection sensor as claimed in claim 1, wherein further embodiments of the present invention are defined by the dependent claims.

According to the claimed invention it is disclosed a detection sensor (100) for detecting the level of a liquid in a container or a storage tank, wherein said sensor comprises a first detection device (101), comprising a support element (102) adapted to be positioned, at least partially, in the inner space defined by said container intended for storing or collecting said liquid; wherein said first device (101) comprises a first electrode (107) and a second electrode (106) supported by said support element (102) in a fixed mutual position, wherein said first device (101) comprises a circuitry connected to said first electrode (107) and said second electrode (106) and configured to establish a difference in potential or a predetermined voltage (V) between said first electrode (107) and said second electrode (106), so that an electrical resistance is established between said first electrode (107) and said second electrode (106), said electrical resistance being of a predetermined value and proportionate to said predetermined difference in potential (V) in a situation in which the level of said liquid in said container is such as not to define any conductive path between said first electrode (107) and said second electrode (106), said electrical resistance being variable as soon as the level of said liquid in the container is such as to establish at least one conductive path between said first electrode (107) and said second electrode (106), and wherein said circuitry is adapted to detect the variations in said electrical resistance.

Each of said first electrode (107) and said second electrode (106) consists of a strip made of electrically conductive material, having a predetermined thickness, said strip being shaped so as to define two main surfaces, which are substantially flat and opposite in the direction of said thickness, at least one of said two flat surfaces of each of said first electrode (107) and said second electrode (106) being placed in contact with said support element (102).

According to the claimed invention, said first device (101) comprises a third electrode (105), which is not connected to said circuitry and is thus subjected to a varying or floating electric potential.

Said third electrode (105) consists of a strip made of electrically conductive material, having a predetermined thickness, said strip being shaped so as to define two main surfaces, which are substantially flat and opposite in the direction of said thickness, at least one of said two flat surfaces of said third electrode (105) being placed in contact with said support element (102).

Said strip made of electrically conductive material of said at least a third electrode (105) is comb-shaped and comprises a plurality of substantially rectilinear and parallel portions (1050), joined at one end by a substantially rectilinear connection portion (1051), which extends along a direction of extension which is different from the direction of extension of said substantially parallel portions (1050), where said strip made of electrically conductive material of said first electrode (107) is substantially linear and placed adjacent to the linear connection portion (1051) of said strip made of electrically conductive material of said third electrode (105).

According to an embodiment, the length of said substantially linear strip made of electrically conducting material of said first electrode (107) is different from the length of the linear connection portion (1051) of said strip made of electrical material of said third electrode (105).

According to an embodiment, said strip made of electrically conductive material of said second electrode (106) is also comb-shaped and comprises a plurality of substantially rectilinear and substantially parallel portions (1060), possibly joined at one end by a substantially rectilinear connection portion (1061), which extends along a direction of extension which is different from the direction of extension of said substantially parallel portions (1060).

According to an embodiment, said substantially rectilinear and substantially parallel portions (1050) of said third electrode (105) and said substantially rectilinear and substantially parallel portions (1060) of said second electrode (106) are mutually interdigitated according to an arrangement of the "comb-finger" type. According to an embodiment, said circuitry is adapted to be connected to an alarm system adapted to activate an alarm signal.

According to an embodiment, said sensor comprises a second detection device (103) according to one of the embodiments summarized above.

According to an embodiment, said first detection device (101) and said second detection device (103) are mutually positioned so that the support elements (102, 104) of said first device (101) and second device (103), respectively, are adapted to be positioned, at least partially, in the inner spaces defined by two separate containers each intended for storing or collecting said liquid, respectively.

The present invention further relates to a household appliance as claimed in claim 8, the use of which involves the use of a liquid, said household appliance comprising at least one storage or collection container of said liquid, said household appliance being equipped with a sensor (100) according to one of the embodiments of the present invention defined by claims 1-7.

According to an embodiment as disclosed, a household appliance comprises two separate containers, each intended for storing or collecting said liquid, where said household appliance is equipped with a sensor (100) according to one of the embodiments summarized above.

According to an embodiment, said circuitry is adapted to activate the blocking of the functions of said household appliance.

### BRIEF DESCRIPTION OF THE DRAWINGS

In the following, the present invention will be further clarified by means of the following detailed description of the possible embodiments depicted in the drawings, in which corresponding or equivalent features and/or component parts of the present invention are identified by the same reference numerals. It should be noted, however, that the present invention is not limited to the embodiments described below and depicted in the drawings, but it is defined by the appended claims.

In the drawings:
- Figures 1a to 1e show a perspective view, an exploded view, a front view, a bottom view and a side view, respectively, of a sensor according to an embodiment not encompassed by the wording of the claims;
- Figure 2 shows a perspective view of a sensor device according to an embodiment not encompassed by the wording of the claims;
- Figures 3a and 3b each show a perspective view of a sensor device according to an embodiment not encompassed by the wording of the claims;
- Figure 4 shows a schematic view of the electrodes of a sensor device according to an embodiment of the claimed invention;

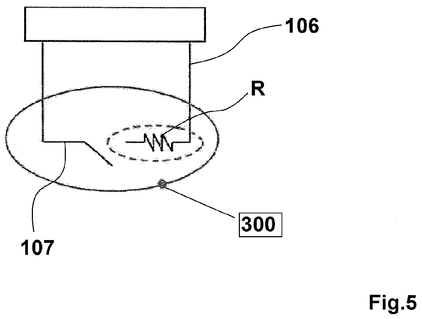

- Figure 5 shows the electric diagram of a sensor device according to an embodiment;
- Figures 6a and 6b show the operating principle of a sensor device according to an embodiment;
- Figures 7a and 7b show the operating principle of a sensor device according to an embodiment.

### DETAILED DESCRIPTION OF THE PRESENT INVENTION

The present invention find particularly convenient application in the field of household appliances such as washing machines, dishwashers and similar household appliances, this explaining why, in the following, the present invention will be described with particular reference to the applications thereof in the field of household appliances, in particular of washing machines.

It should be noted, however, that the possible applications of the present invention are not limited to those described below. On the contrary, the present invention finds convenient application in all cases where it is necessary or convenient to detect the level of a liquid in a container; for example, the present invention finds equally convenient application in the case of tanks, for example of vehicles, for the indication of the level of liquids in said tanks.

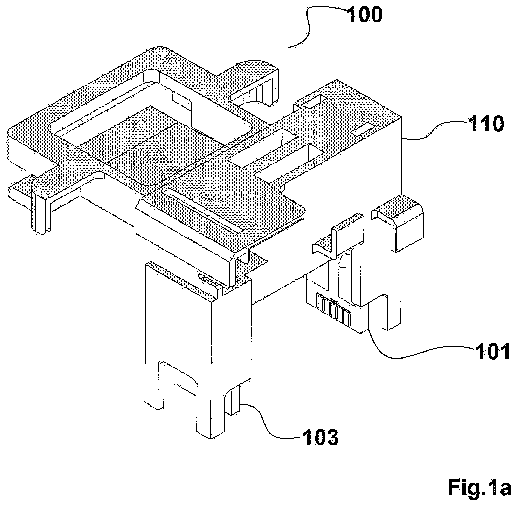

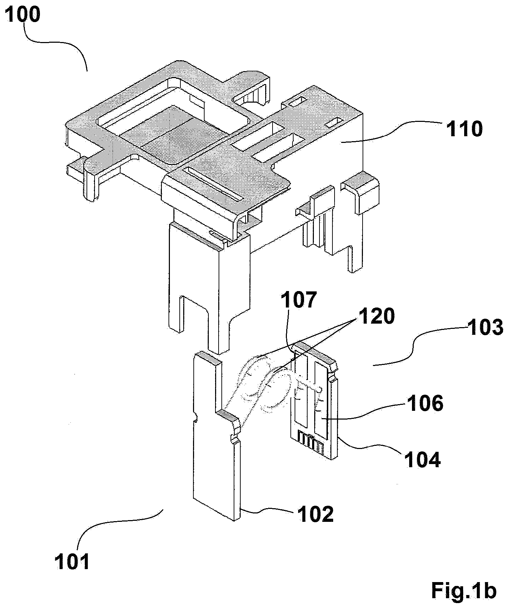

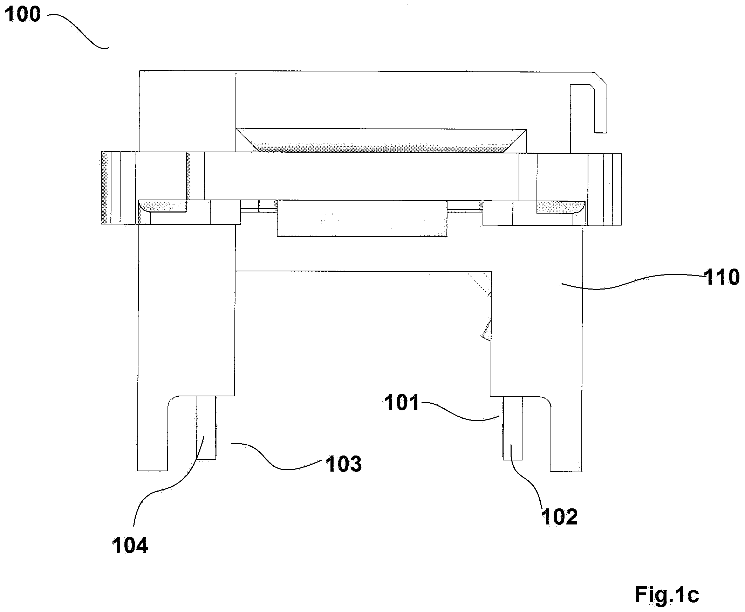

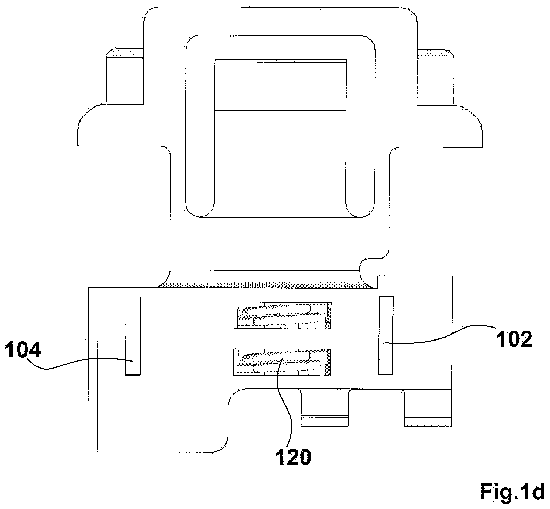

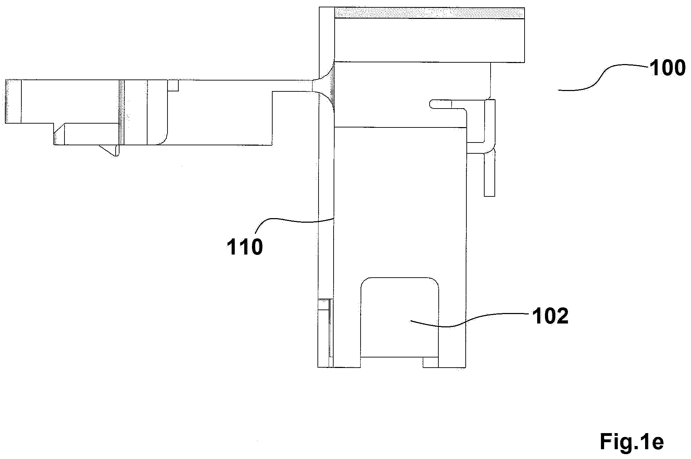

In figures 1a to 1e, the sensor according to the embodiment not encompassed by the wording of the claims depicted therein is identified by reference number 100 and comprises a support frame 110 to which a first device 101 and a second device 103 are applied in the opposite position (opposite to each other); as will clearly appear from the following description, the opposing arrangement of said first device 101 and second device 103 allows the positioning of the frame 110 so that the devices 101 and 103 are in turn positioned in the inner space of a first container or tank and a second container or tank (not shown in the figures), respectively, separated and non-communicating, in particular so as to be at least partially submerged by increasing liquid in said first container and second container. As previously anticipated, said first container and second container may be part of a household appliance as leakage collection containers, but also of a vehicle, for example as tanks.

Again as depicted (and as described in more detail below), said first device 101 and second device 103 comprise a first support 102 and 104, respectively, on each of which at least two electrodes are arranged, said two electrodes of at least one of said first device 101 and second device 102 being connectable to a circuitry (not shown) so that a potential difference is established between said two electrodes of said at least one device; the difference between the two electrodes of one device is transferred to the two electrodes of the second device by means of the elastic element 120 (helical spring in the non-limiting case illustrated).

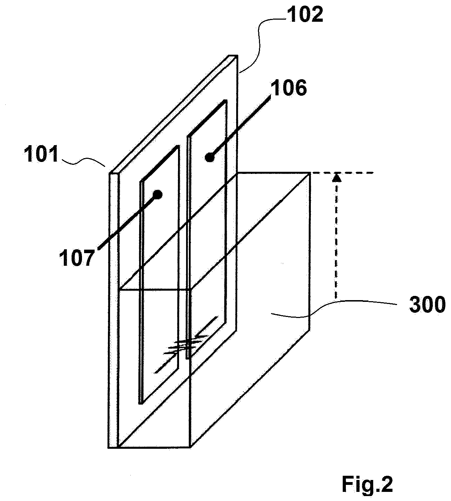

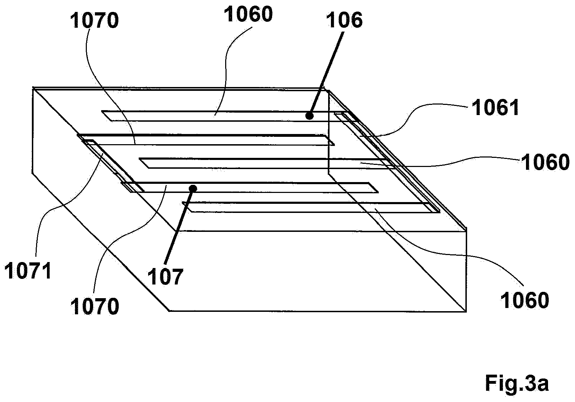

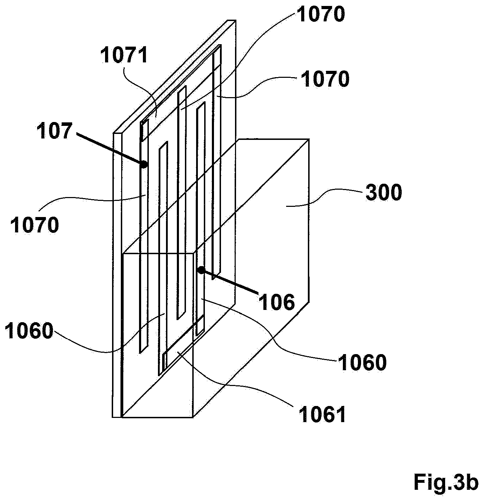

In the following, with reference to figures 2, 3a and 3b, two embodiments not encompassed by the wording of the claims of devices for sensors will be described; since the two devices 101 and 103 are substantially identical, the following description will relate to a single device for synthesis purposes.

According to the embodiment not encompassed by the wording of the claims in figure 2, the device 101 depicted therein comprises a support in the form of a plate 102 made of insulating material (for example resin), on which a first electrode 107 and a second electrode 106 are arranged; again as depicted, said first electrode 107 and second electrode 106 are each made in the form of a conductive strip of predefined thickness, said strip being shaped so as to define two main surfaces, which are substantially flat and opposite to each other in the direction of said thickness, at least one of said two flat surfaces of each of said first electrode 107 and second electrode 106 being placed in contact with said support element 102.

It is therefore apparent that by establishing a potential difference between said first electrode 107 and second electrode 106, for example by imparting a potential V to the electrode 107 and a potential equal to zero to the electrode 106, an electrical circuit is created, said circuit being open in case of absence of water or liquids, said circuit instead being closed if said first electrode 107 and second electrode 106 are both at least partially submerged in water or liquid 300.

The sensor 100 equipped with the device 101 can then be used as a conductivity level sensor; as the water level increases, the resistance between the electrodes 107 and 106 decreases (the section (and thus the volume) of the conductive path established by the water between the electrodes 107 and 106 is proportional to the thickness of the electrodes 107 and 106 and increases as the water level 300 increases, where given a predetermined thickness of the electrodes 107 and 106, the overall resistance between the electrodes 107 and 106 decreases proportionally as the water level 300 increases, in accordance with Ohm's law). Assuming an interface is provided (e.g. an electronic interface) of an adequately accurate reading and thus capable of appreciating the variations in resistance R between the two electrodes 107 and 106, a correlation is established between the different resistance values and the respective different water levels 300. Whereby, according to the above-described embodiment of the sensor, use is no longer made of movable elements such as floats or the like adapted to allow a "digital" reading of the resistance (open circuit or closed circuit); on the contrary, an analog reading is performed by continuously reading the water level 300 as a function of the continuous (but variable) resistance.

The embodiment not encompassed by the wording of the claims depicted in figures 3a and 3b differs from that in figure 2 essentially for the plan shape of the electrodes 107 and 106 and is designed to increase the volume of the conductive path established by water; in fact, as anticipated, the volume of the conductive path is proportional to the thickness of the electrodes 107 and 106 and therefore also to the total area of the surfaces of the electrodes 107 and 106 facing each other or opposite each other perpendicularly to their thickness.

To this end, each of the electrodes 107 and 106 is comb-shaped, wherein: said first electrode 107 comprises a plurality of substantially rectilinear and substantially parallel portions 1070, joined at one end by a substantially rectilinear connection portion 1071, which extends along a direction of extension which is different from the direction of extension of said substantially parallel portions 1070 (in particular perpendicularly to the portions 1070); said second electrode 106 is comb-shaped and comprises a plurality of substantially rectilinear and substantially parallel portions 1060, joined at one end by a substantially rectilinear connection portion 1061 which extends along a direction of extension which is different from the direction of extension of said substantially parallel portions 1060 (in particular perpendicularly to the portions 1060). Furthermore, the rectilinear and parallel portions 1070 and 1060 are mutually "interdigitated", meaning that at least one portion 1070 extends at least partially between two adjacent portions 1060 and/or at least one portion 1060 extends at least partially between two adjacent portions 1070 according to a mutual "comb-finger" arrangement.

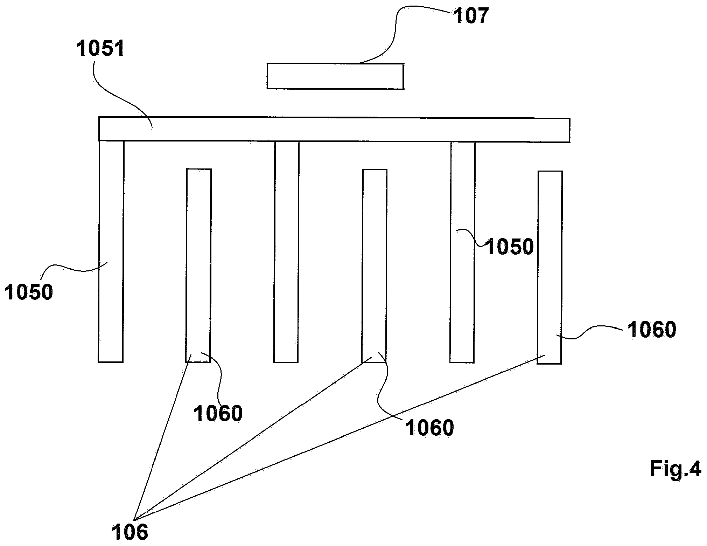

The embodiment according to the claimed invention (schematically) depicted in figure 4 differs from the embodiment in figures 3a and 3b in that it includes a further electrode 105. Imagining in fact that the electrodes 107 and 106 are miniaturized, for example by bringing the electrodes and the gaps therebetween to dimensions of about a tenth of a millimeter, a known physical phenomenon must be addressed: that of the surface tension of water.

In fact, at the aforementioned geometric scales, the surface tension results in an adhesion of the fluid to the solid surfaces that it is found to wet. Such an adhesion is certainly dependent on the material of the electrodes 107 and 106 (and in part of the support 102, not shown in figure 4); at such scales, the molecular adhesion force is much greater than the weight force. The following could therefore happen:
- switching on the device (closed circuit and low resistance read) once the water level rises and wets the electrodes 107 and 106;
- NOT switching off the device (the circuit does not open) once the water level drops: a film of water remains on the electrodes 107 and 106, which, however thin, could cause a conductive path to be maintained therebetween.

There would therefore be a very reliable switch (a sensor) when switching on, but at risk of malfunction when switching off.

The embodiment in figure 4 is conceived to overcome this problem. For this purpose, between the two electrodes 107 and 106 there is a third electrode 105, with no fixed potential (in technical terms referred to as floating electrode 105); once the water interposes between the potential electrode 107 and the floating electrode 105, it determines the passage of current. The point is that the area of the facing surfaces of the electrodes 107 and 105 is very small (the electrode 105 is comb-shaped but the electrode 107 is confirmed as a simple linear strip which is shorter than the connecting portion 1051 of the floating electrode 105), so that when the water level drops and a film thereof keeps them connected, a very high resistance is still established between the electrodes.

Conversely, the area between the floating electrode 105 and the ground electrode 106 is very high (for example, they can be interdigitated according to the methods described above with reference to figures 3a and 3b); this ensures that the resistance of the conductive path established by the water is low with the electrodes 105, 106 and 107 partially submerged.

Two resistances are therefore established in series: one between the potential electrode 107 and the floating electrode 105 which is very low when the sensor is switched on, and very high when the sensor is switched off, and the other between the floating electrode 105 and the ground electrode 106 which is always very low. Overall, the sensor has very low resistance when on, and very high resistance when off. Having introduced the floating electrode 105 with the relationships between the unbalanced interfaced areas as described above determines an efficient switch operation even during the switching off phase.

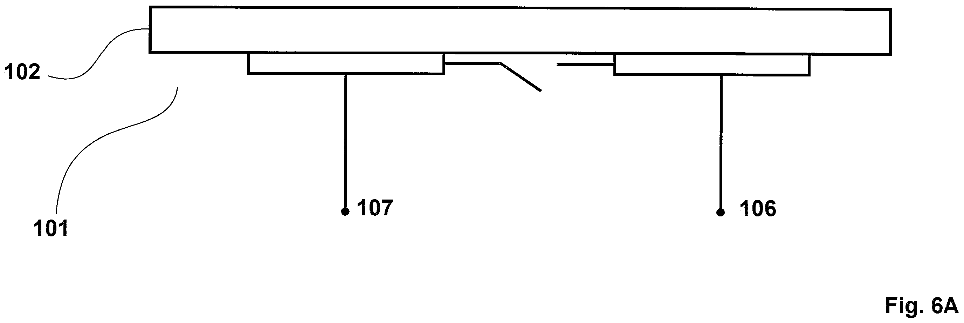

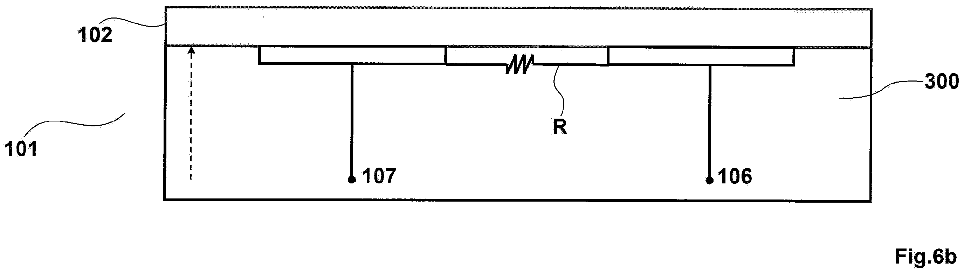

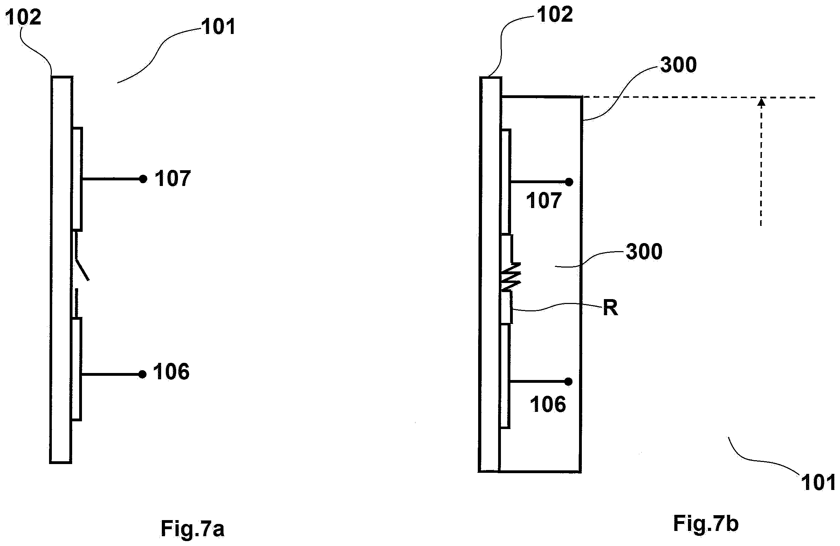

Figures 6a, 6b, 7a and 7b show the operating principle of the sensor according to the present invention; in particular, the figures show how the sensor, in particular the device 101, can be positioned with both the electrodes 107 and 106 horizontal (with respect to the water surface 300 in the container) and vertical (always with respect to the water surface 300 in the container or tank).

As shown, in the case of the horizontal arrangement of the electrodes 107 and 106 (and also 105), in the absence of water the contact is open; in the presence of water, the contact is closed (with resistance in series).

Again as shown, in the case of the vertical arrangement of the electrodes 107 and 106 (and also 105), in the absence of water the contact is open; in the presence of water, the contact is closed (with variable series resistance depending on the degree of immersion).

It has therefore been demonstrated by means of the above detailed description of the embodiments shown in the drawings that the present invention allows to obtain the desired results and to overcome or at least limit the drawbacks found in the background art.

In particular, a liquid level sensor is provided by the present invention, which:
1. is based on a totally electrical and non-mechanical physical principle (whereby there are no moving parts with related problems (misalignments, interlocks, blocks, etc.));
2. Allows to correlate the resistive values to the liquid levels on a merely geometric basis and by different means;
3. has extremely small dimensions, given the possibility of creating electrodes on electronic circuits: the current sensors have dimensions of about 10 cm, compared to a few mm of those of the sensor according to the present invention;
4. allows extreme precision in the creation of the electrodes themselves (for example by lithography) with consequent extreme precision in the reading of the resistance.

Although the present invention has been previously clarified by means of the detailed description of the embodiments depicted in the drawings, the present invention is not limited to the embodiments described and depicted in the drawings.

For example, the present invention allows for the widest range of choices regarding both the materials of the support 102, of the electrodes 107, 106 and 105, as well as of the frame 110, and the shape (at least plan shape) of the electrodes which may comprise coil portions, for example.

Therefore, the scope of protection of the present invention is defined by the claims.

## Claims

1. A detection sensor (100) for detecting the level of a liquid in a container or a storage tank, wherein said sensor comprises a first detection device (101), comprising a support element (102) adapted to be positioned, at least partially, in the inner space defined by said container intended for storing or collecting said liquid; wherein said first device (101) comprises a first electrode (107) and a second electrode (106) supported by said support element (102) in a fixed mutual position, wherein first device (101) comprises a circuitry connected to said first electrode (107) and said second electrode (106) configured to establish a difference in potential or a predetermined voltage (V) between said first electrode (107) and said second electrode (106), so that an electrical resistance is established between said first electrode (107) and said second electrode (106), said electrical resistance being of a predetermined value and proportionate to said predetermined difference in potential (V) in a situation in which the level of said liquid in said container is such as not to define any conductive path between said first electrode (107) and said second electrode (106), said electrical resistance being variable as soon as the level of said liquid in the container is such as to establish at least one conductive path between said first electrode (107) and said second electrode (106), and wherein said circuitry is adapted to detect the variations in said electrical resistance, each of said first electrode (107) and said second electrode (106) being formed by a strip of electrically conductive material, having a predetermined thickness, said strip being shaped in order to define two main surfaces, which are substantially flat and opposite in the direction of said thickness, at least one of said two flat surfaces of each of said first electrode (107) and said second electrode (106) being placed in contact with said support element (102);
**characterized in that** said first device (101) comprises a third electrode (105), which is not connected to said circuitry and is thus subjected to a varying or floating electric potential, **in that** said third electrode (105) is formed by a strip of electrically conductive material, having a predetermined thickness, said strip being shaped in order to define two main surfaces, which are substantially flat and opposite in the direction of said thickness, at least one of said two flat surfaces of said third electrode (105) being placed in contact with said support element (102), and **in that** said strip of electrically conductive material of said at least one third electrode (105) is comb-shaped and comprises a plurality of substantially rectilinear and parallel portions (1050), joined at one end by a substantially rectilinear connection portion (1051), which extends along a direction of extension different from the direction of extension of said substantially parallel portions (1050), and **in that** said strip of electrically conductive material of said first electrode (107) is substantially linear and placed adjacent to the linear connection portion (1051) of said strip of electrically conductive material of said third electrode (105).

2. A sensor according to claim 1, **characterized in that** the length of said substantially linear strip of electrically conducting material of said first electrode (107) is different from the length of the linear connection portion (1051) of said strip of electrical material of said third electrode (105).

3. A sensor according to one of claims 1 and 2, **characterized in that** also said strip of electrically conducting material of said second electrode (106) is comb-shaped and comprises a plurality of substantially rectilinear and parallel portions (1060), optionally joined at one end by a substantially rectilinear connection portion (1061), which extends along a direction of extension different from the direction of extension of said substantially parallel portions (1060).

4. A sensor according to claim 3, **characterized in that** said substantially rectilinear and parallel portions (1050) of said third electrode (105) and said substantially rectilinear and parallel portions (1060) of said second electrode (106) are mutually interdigitated according to an arrangement of the "combfinger" type.

5. A sensor according to one of claims from 1 to 4, **characterized in that** said circuitry is adapted to be connected to an alarm system suitable for activating an alarm signal.

6. A sensor according to one of claims from 1 to 5, **characterized in that** said sensor comprises a second detection device (103).

7. A sensor according to claim 6, **characterized in that** said first detection device (101) and said second detection device (103) are mutually positioned so that the support elements (102, 104) of said first device (101) and second device (103), respectively, are adapted to be positioned respectively, at least partially, in the inner spaces defined by two separate containers each intended for storing or collecting said liquid.

8. A household appliance the use of which requires the use of a liquid, said household appliance comprising at least one container for storing or collecting said liquid, **characterized in that** it is equipped with a sensor (100) according to one of claims from 1 to 7.

9. A household appliance according to claim 8, said household appliance comprising two separate containers, each intended for storing or collecting said liquid, **characterized in that** it is equipped with the sensor (100).

10. A household appliance according to one of claims from 8 to 9, **characterized in that** said circuitry is adapted to activate the lock of the functionalities of said household appliance.

## Patentansprüche

1. Erfassungssensor (100) zum Erfassen des Pegels einer Flüssigkeit in einem Behälter oder einem Speichertank, wobei der Sensor eine erste Erfassungsvorrichtung (101) umfasst, die ein Trägerelement (102) umfasst, das so ausgelegt ist, dass es zumindest teilweise in dem Innenraum positioniert werden kann, der durch den Behälter definiert ist, der zum Speichern oder Sammeln der Flüssigkeit vorgesehen ist; wobei die erste Vorrichtung (101) eine erste Elektrode (107) und eine zweite Elektrode (106) umfasst, die von dem Trägerelement (102) in einer festen gegenseitigen Position gehalten werden, wobei die erste Vorrichtung (101) eine Schaltung umfasst, die mit der ersten Elektrode (107) und der zweiten Elektrode (106) verbunden ist und so konfiguriert ist, dass sie eine Potentialdifferenz oder eine vorbestimmte Spannung (V) zwischen der ersten Elektrode (107) und der zweiten Elektrode (106) herstellt, so dass ein elektrischer Widerstand zwischen der ersten Elektrode (107) und der zweiten Elektrode (106) aufgebaut wird, wobei der elektrische Widerstand einen vorbestimmten Wert hat und proportional zu der vorbestimmten Potentialdifferenz (V) in einer Situation ist, in der der Pegel der Flüssigkeit in dem Behälter so ist, dass er keinen leitenden Pfad zwischen der ersten Elektrode (107) und der zweiten Elektrode (106) definiert, wobei der elektrische Widerstand variabel ist, sobald der Pegel der Flüssigkeit in dem Behälter so ist, dass mindestens ein leitender Pfad zwischen der ersten Elektrode (107) und der zweiten Elektrode (106) gebildet wird, und wobei die Schaltung so ausgelegt ist, dass sie die Veränderungen des elektrischen Widerstands erfasst, wobei sowohl die erste Elektrode (107) als auch die zweite Elektrode (106) durch einen Streifen aus elektrisch leitendem Material gebildet werden, das eine vorbestimmte Dicke aufweist, wobei der Streifen so geformt ist, dass er zwei Hauptoberflächen definiert, die im Wesentlichen flach und in der Richtung der Dicke gegenüberliegend sind, wobei mindestens eine der beiden flachen Oberflächen jeder der ersten Elektrode (107) und der zweiten Elektrode (106) in Kontakt mit dem Trägerelement (102) angeordnet ist;
**dadurch gekennzeichnet, dass** die erste Vorrichtung (101) eine dritte Elektrode (105) umfasst, die nicht mit der Schaltung verbunden ist und somit einem variierenden oder schwebenden elektrischen Potential ausgesetzt ist, dass die dritte Elektrode (105) durch einen Streifen aus elektrisch leitendem Material mit einer vorbestimmten Dicke gebildet ist, wobei der Streifen so geformt ist, dass er zwei Hauptoberflächen definiert, die im Wesentlichen flach und in Richtung der Dicke gegenüberliegend sind, wobei mindestens eine der beiden flachen Oberflächen der dritten Elektrode (105) in Kontakt mit dem Trägerelement (102) angeordnet ist, und dass der Streifen aus elektrisch leitendem Material der mindestens einen dritten Elektrode (105) kammförmig ist und eine Vielzahl von im Wesentlichen geradlinigen und parallelen Abschnitten (1050) umfasst, die an einem Ende durch einen im Wesentlichen geradlinigen Verbindungsabschnitt (1051) verbunden sind, der sich entlang einer Erstreckungsrichtung erstreckt, die sich von der Erstreckungsrichtung der im Wesentlichen parallelen Abschnitte (1050) unterscheidet, und dass der Streifen aus elektrisch leitendem Material der ersten Elektrode (107) im Wesentlichen linear ist und angrenzend an den linearen Verbindungsabschnitt (1051) des Streifens aus elektrisch leitendem Material der dritten Elektrode (105) angeordnet ist.

2. Sensor nach Anspruch 1, **dadurch gekennzeichnet, dass** die Länge des im Wesentlichen linearen Streifens aus elektrisch leitendem Material der ersten Elektrode (107) sich von der Länge des linearen Verbindungsabschnitts (1051) des Streifens aus elektrischem Material der dritten Elektrode (105) unterscheidet.

3. Sensor nach einem der Ansprüche 1 und 2, **dadurch gekennzeichnet, dass** auch der Streifen aus elektrisch leitendem Material der zweiten Elektrode (106) kammförmig ist und eine Vielzahl von im Wesentlichen geradlinigen und parallelen Abschnitten (1060) umfasst, die optional an einem Ende durch einen im Wesentlichen geradlinigen Verbindungsabschnitt (1061) verbunden sind, der sich entlang einer Erstreckungsrichtung erstreckt, die sich von der Erstreckungsrichtung der im Wesentlichen parallelen Abschnitte (1060) unterscheidet.

4. Sensor nach Anspruch 3, **dadurch gekennzeichnet, dass** die im Wesentlichen geradlinigen und parallelen Abschnitte (1050) der dritten Elektrode (105) und die im Wesentlichen geradlinigen und parallelen Abschnitte (1060) der zweiten Elektrode (106) gemäß einer Anordnung vom Typ "Kammfinger" ineinander greifen.

5. Sensor nach einem der Ansprüche 1 bis 4, **dadurch gekennzeichnet, dass** die Schaltung so ausgelegt ist, dass sie an eine Alarmanlage angeschlossen werden kann, die geeignet ist, ein Alarmsignal zu aktivieren.

6. Sensor nach einem der Ansprüche 1 bis 5, **dadurch gekennzeichnet, dass** der Sensor eine zweite Erfassungsvorrichtung (103) umfasst.

7. Sensor nach Anspruch 6, **dadurch gekennzeichnet, dass** die erste Erfassungsvorrichtung (101) und die zweite Erfassungsvorrichtung (103) so zueinander positioniert sind, dass die Trägerelemente (102, 104) der ersten Vorrichtung (101) bzw. der zweiten Vorrichtung (103) so ausgelegt sind, dass sie jeweils zumindest teilweise in den Innenräumen positioniert werden können, die von zwei separaten Behältern definiert werden, die jeweils zum Speichern oder Sammeln der Flüssigkeit bestimmt sind.

8. Haushaltsgerät, dessen Benutzung die Verwendung einer Flüssigkeit erfordert, wobei das Haushaltsgerät mindestens einen Behälter zum Speichern oder Sammeln der Flüssigkeit umfasst, **dadurch gekennzeichnet, dass** es mit einem Sensor (100) nach einem der Ansprüche 1 bis 7 ausgestattet ist.

9. Haushaltsgerät nach Anspruch 8, wobei das Haushaltsgerät zwei getrennte Behälter umfasst, die jeweils zum Speichern oder Sammeln der Flüssigkeit bestimmt sind, **dadurch gekennzeichnet, dass** es mit dem Sensor (100) ausgestattet ist.

10. Haushaltsgerät nach einem der Ansprüche 8 bis 9, **dadurch gekennzeichnet, dass** die Schaltung so ausgelegt ist, dass sie die Verriegelung der Funktionen des Haushaltsgeräts aktivieren kann.

## Revendications

1. Capteur de détection (100) pour la détection du niveau d'un liquide dans un contenant ou un réservoir de stockage, dans lequel ledit capteur comprend un premier dispositif de détection (101), comprenant un élément de support (102) conçu pour être positionné, au moins partiellement, dans l'espace interne défini par ledit contenant destiné à stocker ou collecter ledit liquide ; dans lequel ledit premier dispositif (101) comprend une première électrode (107) et une deuxième électrode (106) portées par ledit élément de support (102) dans une position mutuelle fixe, dans lequel le premier dispositif (101) comprend une circuiterie connectée à ladite première électrode (107) et à ladite deuxième électrode (106), configurée pour établir une différence de potentiel ou une tension prédéterminée (V) entre ladite première électrode (107) et ladite deuxième électrode (106), de sorte qu'une résistance électrique soit établie entre ladite première électrode (107) et ladite deuxième électrode (106), ladite résistance électrique étant d'une valeur prédéterminée et proportionnelle à ladite différence de potentiel prédéterminée (V) dans une situation dans laquelle le niveau dudit liquide dans ledit contenant est tel qu'il ne définit aucun chemin conducteur entre ladite première électrode (107) et ladite deuxième électrode (106), ladite résistance électrique étant variable dès que le niveau dudit liquide dans le contenant est tel qu'il établit au moins un chemin conducteur entre ladite première électrode (107) et ladite deuxième électrode (106), et dans lequel ladite circuiterie est conçue pour détecter les variations de ladite résistance électrique, chacune parmi ladite première électrode (107) et ladite deuxième électrode (106) étant formée par une bande de matériau électriquement conducteur, ayant une épaisseur prédéterminée, ladite bande étant façonnée afin de définir deux surfaces principales, qui sont sensiblement plates et opposées dans la direction de ladite épaisseur, au moins l'une desdites deux surfaces plates de chacune parmi ladite première électrode (107) et ladite deuxième électrode (106) étant placée en contact avec ledit élément de support (102) ;
**caractérisé en ce que** ledit premier dispositif (101) comprend une troisième électrode (105), qui n'est pas connectée à ladite circuiterie et est ainsi soumise à un potentiel électrique variable ou flottant, **en ce que** ladite troisième électrode (105) est formée par une bande de matériau électriquement conducteur, ayant une épaisseur prédéterminée, ladite bande étant façonnée afin de définir deux surfaces principales, qui sont sensiblement plates et opposées dans la direction de ladite épaisseur, au moins l'une desdites deux surfaces plates de ladite troisième électrode (105) étant placée en contact avec ledit élément de support (102), et **en ce que** ladite bande de matériau électriquement conducteur de ladite au moins une troisième électrode (105) est en forme de peigne et comprend une pluralité de parties sensiblement rectilignes et parallèles (1050), jointes à une extrémité par une partie de connexion sensiblement rectiligne (1051), qui s'étend le long d'une direction d'extension différente de la direction d'extension desdites parties sensiblement parallèles (1050), et **en ce que** ladite bande de matériau électriquement conducteur de ladite première électrode (107) est sensiblement linéaire et placée de manière adjacente à la partie de connexion linéaire (1051) de ladite bande de matériau électriquement conducteur de ladite troisième électrode (105).

2. Capteur selon la revendication 1, **caractérisé en ce que** la longueur de ladite bande sensiblement linéaire de matériau électriquement conducteur de ladite première électrode (107) est différente de la longueur de la partie de connexion linéaire (1051) de ladite bande de matériau électrique de ladite troisième électrode (105).

3. Capteur selon l'une des revendications 1 et 2, **caractérisé en ce que**, également, ladite bande de matériau électriquement conducteur de ladite deuxième électrode (106) est en forme de peigne et comprend une pluralité de parties sensiblement rectilignes et parallèles (1060), facultativement jointes à une extrémité par une partie de connexion sensiblement rectiligne (1061), qui s'étend le long d'une direction d'extension différente de la direction d'extension desdites parties sensiblement parallèles (1060).

4. Capteur selon la revendication 3, **caractérisé en ce que** lesdites parties sensiblement rectilignes et parallèles (1050) de ladite troisième électrode (105) et lesdites parties sensiblement rectilignes et parallèles (1060) de ladite deuxième électrode (106) sont mutuellement interdigitées selon un agencement du type « dents de peigne ».

5. Capteur selon l'une des revendications 1 à 4, **caractérisé en ce que** ladite circuiterie est conçue pour être connecté à un système d'alarme approprié pour l'activation d'un signal d'alarme.

6. Capteur selon l'une des revendications 1 à 5, **caractérisé en ce que** ledit capteur comprend un second dispositif de détection (103).

7. Capteur selon la revendication 6, **caractérisé en ce que** ledit premier dispositif de détection (101) et ledit second dispositif de détection (103) sont mutuellement positionnés de sorte que les éléments de support (102, 104) dudit premier dispositif (101) et dudit second dispositif (103), respectivement, soient conçus pour être positionnés respectivement, au moins partiellement, dans les espaces internes définis par deux contenants séparés destinés chacun au stockage ou à la collecte dudit liquide.

8. Appareil ménager dont l'utilisation requiert l'utilisation d'un liquide, ledit appareil ménager comprenant au moins un contenant pour le stockage ou la collecte dudit liquide, **caractérisé en ce qu'**il est équipé d'un capteur (100) selon l'une des revendications 1 à 7.

9. Appareil ménager selon la revendication 8, ledit appareil ménager comprenant deux contenants distincts, chacun étant destiné au stockage ou à la collecte dudit liquide, **caractérisé en ce qu'**il est équipé du capteur (100).

10. Appareil ménager selon l'une des revendications 8 à 9, **caractérisé en ce que** ladite circuiterie est conçue pour activer le verrouillage des fonctionnalités dudit appareil ménager.
